# EUROPEAN PATENT SPECIFICATION

(11) **EP 4 530 851 B1**
(45) Date of publication and mention of the grant of the patent: **18.11.2026**
(21) Application number: 24199095.1
(22) Date of filing: 06.09.2024
(51) Int. Cl.: G06F 11/07, G06F 9/50, H04L 67/10

(54) **CONTAINER MANAGEMENT METHOD AND APPARATUS BASED ON CLOUD PLATFORM**
BEHÄLTERVERWALTUNGSVERFAHREN UND -VORRICHTUNG AUF BASIS EINER CLOUD-PLATTFORM
PROCÉDÉ ET APPAREIL DE GESTION DE CONTENEUR BASÉS SUR UNE PLATEFORME EN NUAGE

(30) Priority: 22.09.2023 CN 202311240750
(43) Date of publication of application: 02.04.2025
(73) Proprietor: New H3C Technologies Co., Ltd., Hangzhou, Zhejiang 310052 (CN)
(72) Inventor: LI, Sheng, Beijing, 100102 (CN)
(74) Representative: IPAZ

(56) References cited:
- US-B1- 10 133 619
- VMWARE: "CONTAINERS AND CONTAINER NETWORKING For Network Engineers", 1 January 2018 (2018-01-01), XP055733747, Retrieved from the Internet <URL:https://images.nsx.techzone.vmware.com/sites/default/files/vmware-containers-and-container-networking-whitepaper.pdf> [retrieved on 20200924]

## Description

### TECHNICAL FIELD

The invention relates to the field of network communication, in particular to a container management method and apparatus based on a cloud platform.

### BACKGROUND

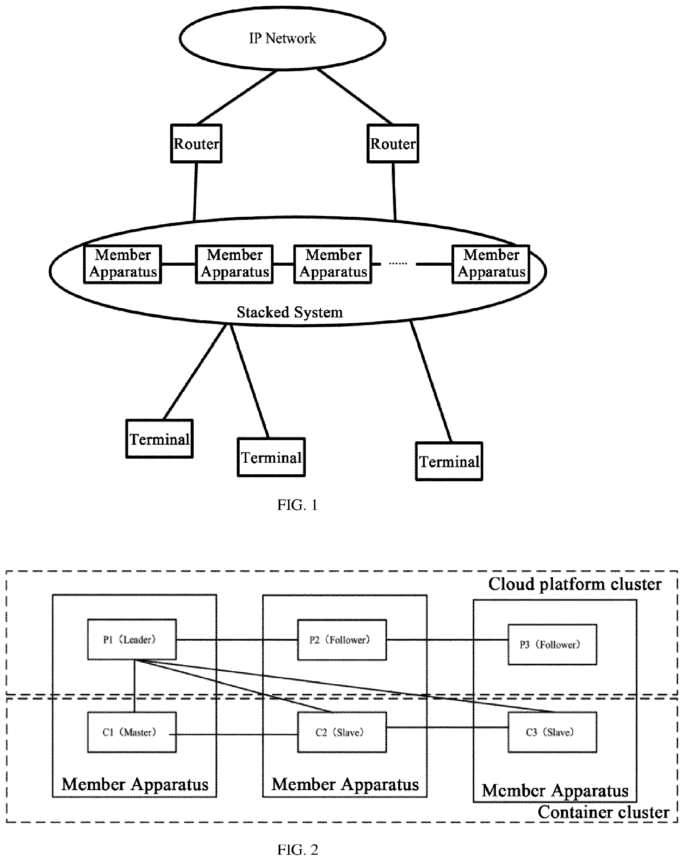

Virtualization technology has the core idea that multiple physical apparatuses are connected together and necessary configurations are performed on the multiple physical apparatuses, then the multiple physical apparatuses automatically converge and virtualize into a single virtual apparatus (also known as a stacked system). Figure 1 illustrates the Intelligent Resilient Framework (IRF) as an example of a stacked system. For ease of understanding, the various physical apparatuses in the stacked system may be referred to as member apparatuses of the stacked system. Using this virtualization technology, it is possible to aggregate the hardware resources and software processing capabilities of multiple physical apparatuses, achieve collaborative work, unified management, and uninterrupted maintenance of multiple physical apparatuses.

With the rapid popularity of container technology, various container applications are becoming increasingly widespread and deep, and how to combine the stacked system with containers is a pressing technical issue that needs to be addressed.

US 10133619 B1 discloses a system for self-configuring health monitoring instrumentation for clustered storage platforms. Master and slave health modules implement a health monitoring system in a clustered virtualization environment comprising a plurality of nodes of the cluster with an installed health module instance running on the nodes. The health module system may gather and analyze data on a node level and at a cluster level to manage the cluster. The cluster health module system observes I/O commands issued to, and I/O command responses returned from, a common storage pool. Health data is stored in the storage pool.

### SUMMARY

In view of this, the examples of the present disclosure provide a container management method and apparatus based on a cloud platform, to utilize a cloud platform cluster in a stacked system to manage container clusters and implement the container management method based on a cloud platform.

The above-mentioned objects are solved with the features of independent claims. Further examples are defined in the dependent claims.

The invention is set out in the appended set of claims.

The technical solutions provided by the examples of the present disclosure may include the following beneficial effects:

In the examples, real-time monitoring of each container in the container cluster is achieved through the Leader in the cloud platform cluster, enabling container management based on the cloud platform by utilizing the cloud platform cluster in the stacked system to manage the container cluster.

Furthermore, in the examples, in response to determining that the master in the container cluster is abnormal, a container with the largest health level is selected as the master container in the container cluster based on the health levels of containers, effectively avoiding the operating scenarios such as two master containers, a faulty master container, or a faulty slave container being represent in the network, thereby increasing the stability of the entire stacked system;

Further, in the examples, in response to determining that any container detects an abnormality in the cloud platform serving as the leader or the link between the container and the leader, the container will cooperate with other containers in the container cluster to autonomously elect the master; and in response to determining that the leader is normal and the link between the container and the leader is normal, the leader centrally controls the master election process within the container cluster, achieving a dual-layer strategy for electing the master and greatly improving the reliability of the stacked system.

Further, in the examples, in response to determining that any container detects an abnormality in the cloud platform serving as the leader or the link between the container and the leader, the unicast election message is sent to other containers participating in this election in the container cluster based on the container cluster topology information to obtain the container health levels of the other containers, rather than broadcasting the election message, thus avoiding network oscillation.

### BRIEF DESCRIPTION OF THE DRAWINGS

Figure 1 is a schematic diagram of the stacked system network shown in the example of the present disclosure;
Figure 2 is a schematic diagram of each cluster in the stacked system shown in the example of the present disclosure;
Figure 3 is a schematic diagram of a method shown in the example of the present disclosure;
Figure 4 is a schematic diagram of container topology construction shown in the example of the present disclosure;
Figure 5 is a schematic diagram of container reporting shown in the example of the present disclosure;
Figure 6 is a schematic diagram of dual-layer master election shown in the example of the present disclosure;
Figure 7 is a schematic diagram of master election shown in the example of the present disclosure;
Figure 8 is a schematic diagram of master election network provided in the example of the present disclosure;
Figure 9 is a schematic diagram of state switching provided in the example of the present disclosure;
Figure 10 is another schematic diagram of process 303 provided in the example of the present disclosure;
Figure 11 is a structural diagram of an apparatus shown in the example of the present disclosure;
Figure 12 is a hardware structure diagram of an apparatus shown in the example of the present disclosure.

### DETAILED DESCRIPTION

Illustrative examples will be described in detail herein with the examples thereof illustrated in the drawings. When the following descriptions relate to the drawings, like numerals in different drawings represent like or similar elements unless stated otherwise. The implementations described in the following examples do not represent all implementations consistent with the present disclosure. On the contrary, they are merely examples of an apparatus and a method consistent with some aspects of the present disclosure described in detail in the appended claims.

The terminology used in the present disclosure is for the purpose of describing a particular example only, and is not intended to be limiting of the present disclosure. The singular forms such as "a", "said", and "the" used in the present disclosure and the appended claims are further intended to include multiple, unless the context clearly indicates otherwise. It is also to be understood that the term "and/or" as used herein refers to any or all possible combinations that include one or more associated listed items.

It is to be understood that although different information may be described using the terms such as first, second, third, etc. in the present disclosure, these information should not be limited to these terms. These terms are used only to distinguish the same type of information from each other. For example, the first information may also be referred to as the second information and similarly, the second information may also be referred to as the first information. Depending on the context, the word "if" as used herein may be interpreted as "when" or "as" or "in response to determining".

A description of the application scenarios provided by the examples of the present disclosure is provided:

In this example, a cloud platform and a container run on each member apparatus of the stacked system. For example, as shown in Figure 2, three physical apparatuses form a stacked system, such as an Intelligent Resilient Framework (IRF) stacked system. Wherein P1, P2, and P3 represent the cloud platforms running on the three physical apparatuses, and C1, C2, and C3 represent the Comware V9 containers running on the three physical apparatuses.

In this example, the cloud platforms running on the physical apparatuses in the stacked system form a cloud platform cluster. Herein, one of the cloud platforms in the cloud platform cluster serves as a leader, and the remaining cloud platforms serve as followers. The role of each cloud platform in the cloud platform cluster may be elected through set algorithms such as the Raft algorithm, which will be described below by examples, and is not elaborated here. Figure 2 provides an example of the cloud platform cluster and the roles of the cloud platforms in the cloud platform cluster.

In this example, the containers running on the physical apparatuses in the stacked system form a container cluster. Herein, one of the containers in the container cluster serves as the master container (master), and the remaining containers serve as slave containers (Slaves). The election of roles of the containers in the container cluster will be described by examples later, and is not elaborated here. Figure 2 provides an example of the container cluster and the roles of the containers in the container cluster.

Based on the above description, a description of the methods provided by the present disclosure is as follows:

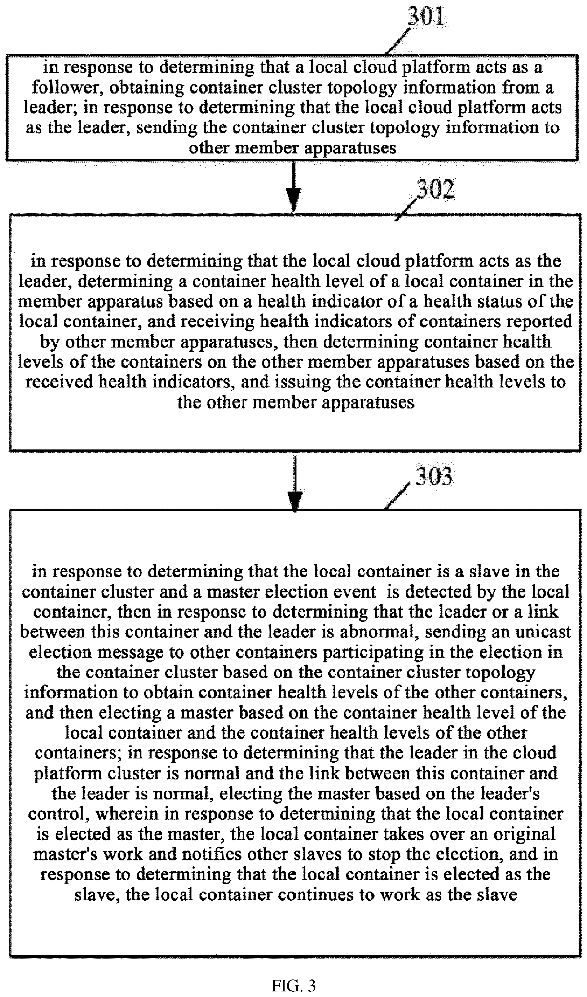

Referring to Figure 3, Figure 3 is schematic diagram of a method provided by the present disclosure, which is applied to any member apparatus in a stacked system.

As shown in Figure 3, the schematic diagram comprises the following blocks:

Block 301, in response to determining that the local cloud platform acts as a follower, obtaining the container cluster topology information from the leader; in response to determining that the local cloud platform acts as a leader, sending the container cluster topology information to other member apparatuses.

As an example, a cloud platform in the cloud platform cluster may comprise a working component (Worker). Furthermore, at least one cloud platform comprises a management component (Manager). In this example, the cloud platform deployed with the manager may serve as a candidate leader and the cloud platform not deployed with the manager does not serve as a candidate leader. Based on this, in response to determining the leader in the cloud platform cluster leaves, other cloud platforms serving as candidates initiate a voting request as quick as possible. Any cloud platform casts a vote (choosing from the candidates) after receiving a voting request. In response to determining that one of the cloud platforms serving as candidates receives more than half of the votes, this cloud platform is determined as the leader, to replace the original leader to work.

In this example, the manager in the leader is responsible for managing the cloud platform cluster and uniformly processing the external configurations (also known as API processing). The Worker in the leader is responsible for managing a local container, for example, obtaining the running status of the local container and reporting it to the local manager. The Worker in the follower is responsible for managing a local container, such as obtaining the running status of the local container and reporting it to the manager in the leader, as well as receiving a container scheduling message issued by the manager in the leader, such as deploying a container and building a container cluster. It may be seen that this example uses the cloud platform to create containers and build a container cluster, eliminating the need for self-broadcasting to implement container stacking, effectively avoiding Layer 2 broadcast storms and network oscillations.

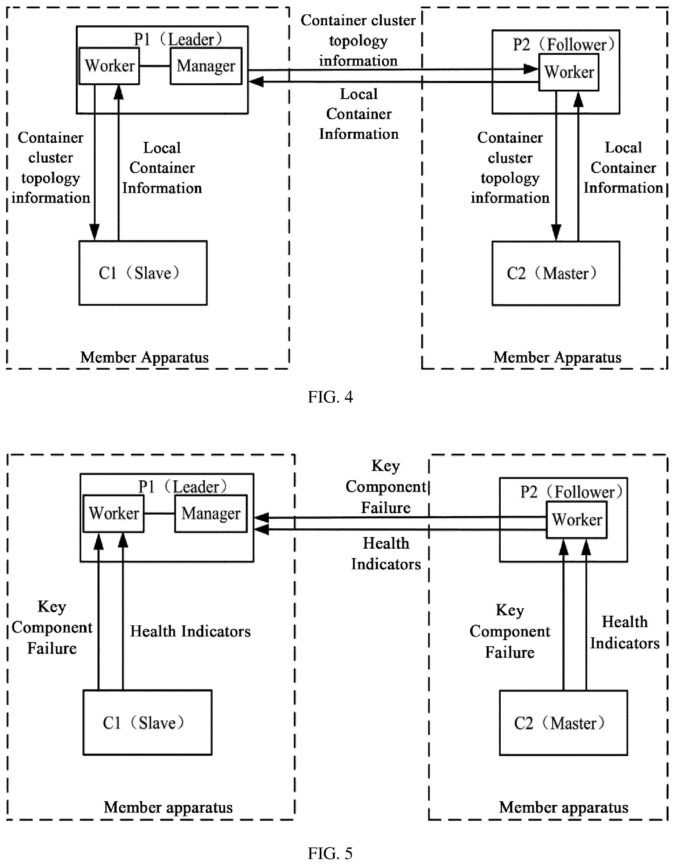

In this example, any container comprises a cloud platform agent component (Agent). The Worker of the cloud platform on any member apparatus of the stacked system communicates with the cloud platform Agent in the local container to obtain container information. Based on this, in block 301, in response to determining that the local cloud platform acts as a follower, obtaining the container cluster topology information from the leader may comprise: communicating with the leader through the local Worker to send local container information, i.e. container ID, member number, container MAC, etc., to the leader, enabling the leader to obtain the container information of containers on all member apparatuses in the entire stacked system (equivalent to obtaining the container cluster topology information by the leader); receiving the container cluster topology information issued by the leader through the local Worker. As a result, the container cluster topology information is obtained from the leader. Figure 4 provides an example of a schematic diagram of issuance of the container cluster topology information.

Of course, in block 301, in response to determining that the local cloud platform acts as a leader, sending the container cluster topology information to other member apparatuses may comprise: sending the container cluster topology information to the Workers in the various followers through the local manager. A container topology change event may occur in the stacked system in which a container is added or deleted , and may be detected by the leader. The leader may further distribute the changed container cluster topology information to the Workers in the various followers through the local manager.

Block 302, in response of determining that the local cloud platform acts as a leader, determining a container health level of the local container on the member apparatus based on a health indicator of a health status of the local container, and receiving health indicators of containers reported by other member apparatuses, then determining container health levels of the containers on the other member apparatuses, and issuing the container health levels to the other member apparatuses.

In this example, the leader monitors the health indicators of the various containers in the container cluster through the local manager to intelligently manage the containers. Figure 5 provides an example of a schematic diagram of reporting of health indicators of containers. For example, as shown in Figure 5, in response to determining that the Worker in a cloud platform (comprising leader and follower) on each member apparatus monitors a health indicator, it reports the health indicator to the manager in the leader. As a result, the leader monitors the health indicators of the various containers in the container cluster through the local manager.

Optionally, in this example, the health indicator of the container is to reflect the business operation of the container. In some specific implementations, the health indicator may comprise: health indicators in the container environment, and health indicators in the container capacity. Any health indicator may be represented by a health indicator type and a health indicator value. Table 1 provides an example of a health indicator of a container from the dimensions of container environment and container capacity:

**Table 1**

| **Dimension** | **Health Indicator Type** | **Meaning** | **Health Indicator Value** |
|---|---|---|---|
| **Container Environment** | Chip Jam | Chip Jam | 0 or 100 |
| | CPU Port | CPU Port | 0 or 100 |
| | Board Status | Board Status | 0 or 100 |
| | Fan Status | Fan Status | 0 or 100 |
| | Temperature Status | Temperature Sensor Status | 0 or 100 |
| | Abnormal Reboot | Device Abnormal Restart Times (>2 Times) | 0 or 100 |
| **Container Capacity** | Arp Resource | Arp Entry Exceeding a Threshold (Used/Total) | 70 or 100 |
| | Mac Resource | Mac Entry Exceeding a Threshold (Used/Total) | 70 or 100 |
| | FIB Resource | Fib Entry Exceeding a Threshold (Used/Total) | 70 or 100 |
| | ND Resource | ND Entry Exceeding a Threshold (Used/Total) | 70 or 100 |
| | IPv4 Resource_L2 | IPv4 Two-layer Multicast Entry Exceeding a Threshold (Used/Total) | 70 or 100 |
| | IPv6 Resource_L2 | IPv6 Two-layer Multicast Entry Exceeding a Threshold (Used/Total) | 70 or 100 |
| | IPv4 Resource_L3 | IPv4 Three-layer Multicast Entry Exceeding a Threshold (Used/Total) | 70 or 100 |
| | IPv6 Resource_L3 | IPv6 Three-layer Multicast Entry Exceeding a Threshold (Used/Total) | 70 or 100 |
| | CPU Resource | Exceeding CPU Resource Threshold | 70 or 100 |
| | Memory Resource | Memory Resources Exceeding a Threshold | 70 or 100 |

In this example, the container environment health level may be determined based on the health indicators in various dimensions in the container environment, and the container capacity health level may be determined based on the health indicators in various dimensions in the container capacity. After that, the final container health level is determined based on the apparatus environment health level and the container capacity environment health level. In this example, the container health level reflects the true health status of the container. The higher the health level, the higher the priority, and the higher the probability of being elected as a master. In response of determining that the container health levels are the same, the container capacity represents the operating status of the container. The higher the container capacity, the higher the corresponding priority, and the higher the probability of being elected as a master.

Optionally, in this example, there are many ways to determine the apparatus environment health level based on the health indicators in various dimensions in the container environment in the specific implementation, for example, by selecting a health indicator with the minimum value in the container environment as the apparatus environment health level, which is not limited in this example.

Optionally, in this example, there are many ways to determine the container capacity health level based on the health indicators in various dimensions in the container capacity in the specific implementation, such as by selecting a health indicator with the minimum value in the container capacity as the container capacity health level, which is not limited in this example.

Optionally, in this example, the container health level may be calculated based on the following formula: Container Health Level = (Apparatus Environment Health Level + Capacity Health Level)/2. It should be noted that this is just an example of how to calculate the container health level, which is not a limitation.

Block 303, in response to determining the local container is a slave in the container cluster, in response to determining that a master election event is detected by the local container, then in response to determining that the leader or a link between this container and the leader is abnormal, sending a unicast election message to other containers participating in the election in the container cluster based on the container cluster topology information to obtain container health levels of the other containers, and electing the master based on the container health level of the local container and the container health levels of the other containers; in response to determining that the leader in the cloud platform cluster is normal and the link between this container and the leader is normal, electing the master based on the control of the leader; wherein in response to determining that the local container is elected as the master, the local container takes over the original master's work and notifies other slaves to stop the election, and in response to determining that the local container is elected as the slave, it will continue to function in the role of slave.

In this example, the master election event may be triggered by faulty of a key component designated to a master in the container cluster, heartbeat detection timeout of a slave in the container cluster, etc. Optionally, heartbeat detection may be performed between a slave and a master in the container cluster, for example, the slave sending a heartbeat message to the master regularly, and in response to determining that no response is received from the master within the set time period from sending the heartbeat message, it is considered a heartbeat detection has timed out. As an example, once a slave detects a heartbeat detection timeout, the cloud platform Agent in the slave notifies the driver, which in turn notifies the apparatus management of insertion/removal events, thereby updating the membership presence information in the container cluster topology in a timely manner.

Optionally, in this example, the key component may be a functional component with a high real-time operation, and the faulty of the key component will affect the operation of the entire container. Optionally, the key component here may be CPU, plug board, etc. This example does not specifically limit it. Table 2 provides a situation of key component faulty:

**Table 2**

| **Num.** | **Key Component Faulty** | **Meaning** | **TLV** | **Faulty Impact** | **Faulty recovery processing** |
|---|---|---|---|---|---|
| **1** | Chip jam | Chip Jam Timing | Normal Abnormal | Container Faulty | Faulty Isolation |
| **2** | CPU port | CPU Port Faulty | Normal Abnormal | Container Faulty | Faulty Isolation |
| **3** | Board status | Plug Board Faulty (Used For Distributed Equipment) | Normal Abnormal | Container Faulty | Faulty Isolation |
| **4** | Stack heartbeat | Link Faulty Between Different Containers | Timeout Recover Node Information | Container Cluster Division | Cluster Division isolation such as primary board switchover and standby board removal, etc. |

Optionally, in this example, the container is equivalent to an operating system. In response of determining that a critical component, i.e. CPU, in the container fails, the cloud platform on the member apparatus where the container is located reports the faulty of the critical component to the manager in the leader through the local Worker in response to determining that the leader is normal. Figure 5 provides an example of reporting the faulty of the critical component by the container. For example, in response to determining that the CPU in C2 fails, the Worker in P2 as a follower will report the CPU faulty to the manager in the leader. Once the manager in the leader receives the above critical component faulty, it will trigger a master election.

As an example, in response to determining that the container cluster is stacked in a star-shaped manner, then in response to determining that a slave in the container cluster detects a master election event, it will obtain the container health level of each of other containers based on the container cluster topology information, and then elect a master based on the container health level of the local container and the container health levels of the other containers.

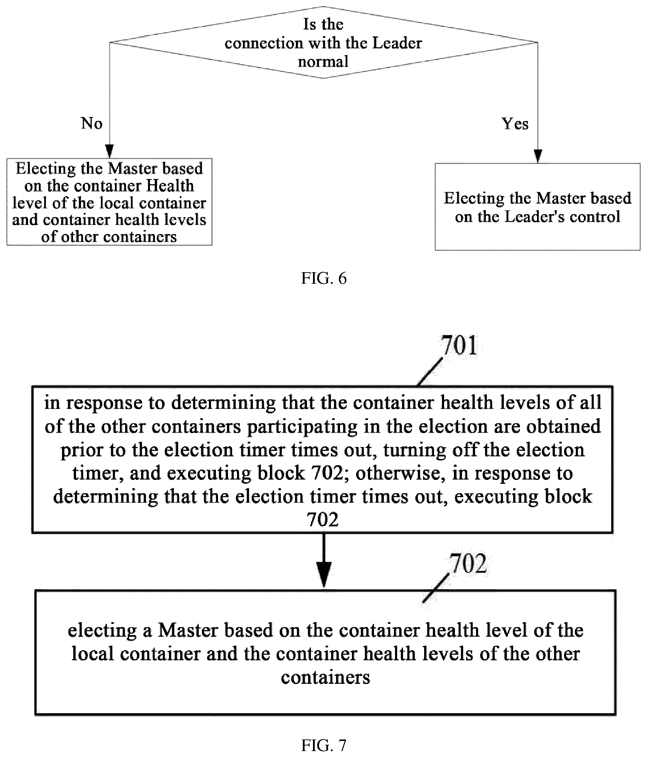

As an example, considering the container cluster is intended to be handled uniformly by the cloud platform, in response to determining that the leader is abnormal or the link between this container and the leader is abnormal, a unicast election message is sent to the other containers participating in this election based on the container cluster topology information to obtain the container health levels of the other containers, and then a master is elected based on the container health level of the local container and the container health levels of the other containers (also known as election of master by container itself, referred to as container inner-layer election of master); in response to determining that the leader in the cloud platform cluster is normal and the link between this container and the leader is normal, the master is elected based on the leader's control (also known as election of master under cloud platform's centralized control, referred to as cloud platform outer-layer election of Master.). Besides, in response to determining that the local container is elected as the master, the local container takes over the original master's work and notifies other slaves to stop the election. In response to determining that the local container is elected as the slave, the local container continues to work as a slave. For example, as shown in Figure 6, in response to determining that the connection of this follower with the leader is normal, a master is elected based on the leader's control; otherwise, a master is elected based on the container health level of the local container and the container health levels of the other containers. This achieves a dual-layer master election strategy, improving the stability of the stacked system.

Optionally, heartbeat detection may further be performed between slaves in the container cluster, and other containers participating in this election may be containers connected to the slaves.

So far, the flow shown in Figure 3 is completed.

It can be seen from the processes shown in Figure 3 that, this example realizes real-time monitoring of various containers in the container cluster by the leader of the cloud platform cluster, achieving container management based on the cloud platform by using the cloud platform cluster in the stacked system to manage the container cluster.

Furthermore, in this example, in response of determining that the master in the container cluster is abnormal, a container with the largest health level is elected based on the health levels of containers as the master container in the container cluster, effectively avoiding the operating scenarios such as two master containers, faulty master container, or faulty slave container being present in the network, thereby increasing the stability of the entire stacked system.

Furthermore, in this example, in response to determining that any container detects an abnormality in the cloud platform serving as the leader or the link between this container and the leader, the container will cooperate with other containers in the container cluster to autonomously elect a master, and in response to determining that the leader is normal and the link between this container and the leader is normal, the leader centrally controls the master election process within the container cluster, achieving a dual-layer master election strategy, greatly improving the reliability of the stacked system.

Furthermore, in this example, in response to determining that any container detects an abnormality in the cloud platform serving as the leader or the link between this container and the leader, an unicast election message is sent to other containers participating in this election based on the container cluster topology information to obtain the container health levels of the other containers, rather than broadcasting the election message, thus avoiding network oscillation.

The following describes the block 303 in this example of electing a master based on the container health level of the local container and the container health levels of the other containers:
Optionally, in this example, in response to determining that any container determines that it is necessary to re-elect a master, the status of the local container will be switched to the election state, and an election timer will be started.

Based on this, block 303 of electing a master based on the container health level of the local container and the container health levels of the other containers may comprise the following flow as shown in Figure 7:
Block 701: in response to determining that the container health levels of all of the other containers participating in the election are obtained prior to the election timer times out, turning off the election timer, and executing block 702. Otherwise, in response to determining that the election timer times out, block 702 is executed.

In this example, all other containers, with respect to the local container, participating in the election refer to containers whose heartbeat detection with the local container has not timed out, or containers that can be reached by the local container. In this example, all slaves further perform heartbeat detection with each other.

Block 702: Electing a master based on the container health level of the local container and the container health levels of the other containers.

Optionally, in this example, a master may be selected based on the following election decision criteria:
the container with the optimal (i.e., the largest) container health level, is selected as a master.

In response to determining that the container health levels are the same, the container with the longest running time is selected as a master.

In response to determining that the running time is the same, the container which has a Mac address meeting the set requirements (such as, the minimum), is selected as a master.

Based on the above election decision criteria, block 702 may specifically comprise: electing a container with the largest container health level from the container health level of the local container and the container health levels of the other containers; in response to determining that values of container health levels of two or more containers are the same and largest, electing a container with the longest running time from the two or more containers; in response to determining that the number of the elected containers with the longest running time is greater than 1, selecting, from the elected containers with the longest running time, a container which has the bridge MAC address meeting the set requirements as the master.

So far, the flow shown in Figure 7 is completed.

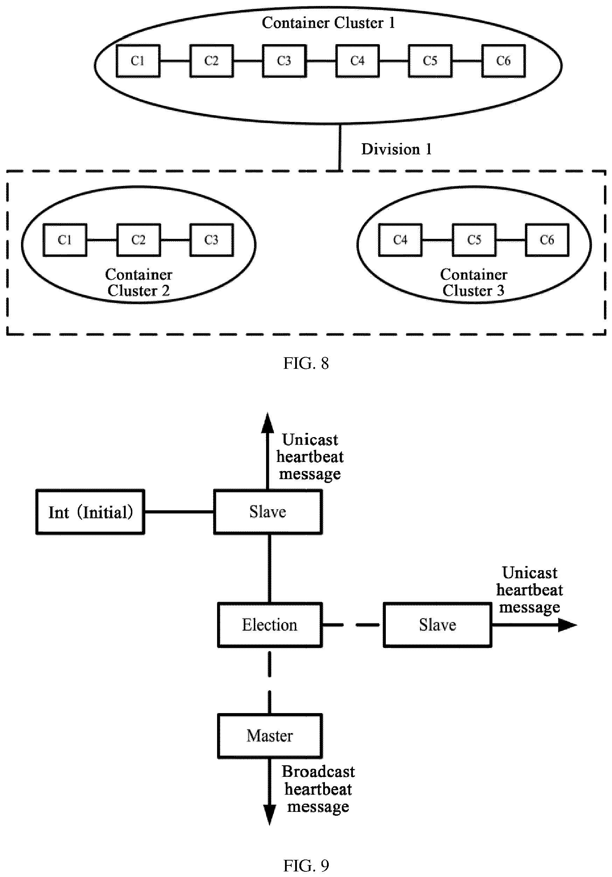

Through the flow shown in Figure 7, it is demonstrated how to elect a master based on the container health level of the local container and the container health levels of the other containers. Figure 8 provides a schematic representation through networking. As shown in Figure 8, it is assumed that the initial container cluster (represented as container cluster 1) consists of C1 to C6, with C1 as the master, and due to a link abnormality between C4 and C1, the container cluster is divided into container clusters 2 and 3, where the container cluster 2 consists of C1 to C3, and the container clusters 3 consists of C4 to C6. For the container cluster 2, C1 may still serve as the master, but for the container cluster 3, in response to determining that the leader fails, C4 to C6 in the container cluster will execute the processes shown in Figure 7. Taking C4 as an example, C4 enters the election state, and starts the election timer; and in response to determining that the container health levels of all other containers, namely C5 and C6, participating in the election, are obtained prior to the election timer times out, turns out the timer, and selects a master based on the container health level of the local container and the container health levels of the other containers, namely C5, C6. Otherwise, in response to determining that the election timer times out, a master is elected based on the container health level of the local container and the container health levels of the other containers, namely C5, C6. In response to determining that in the container health levels of C4 to C6, the health level of C4 is the largest, then C4 is elected as the master for the container cluster 3.

In this example, based on the above description, it may be seen that containers may switch between master/slave, election state, and master/slave. Taking container C4 shown in Figure 8 as an example, Figure 9 illustrates the schematic diagram of status switching of C4. As shown in Figure 9, initially, C1 is the master, and C4 is the slave, and C4 sends an unicast heartbeat message to C1 for heartbeat detection. In response to determining that a faulty in C1 or in a link between C1 and C4 is detected through heartbeat detection, C4 triggers a re-election of the master. In the re-election of the master, C4 enters the election state (Election) and starts the election timer. Then, based on the container health level of C4 and the container health levels of other containers, namely C5, C6, a master is elected. In response to determining that C4 is elected as a master, C4 switches from Election to master and broadcasts a heartbeat message. In response to determining that C4 is elected as a slave and C5 is elected as a master, C4 switches from Election to slave and send a unicast heartbeat message to the newly elected master.

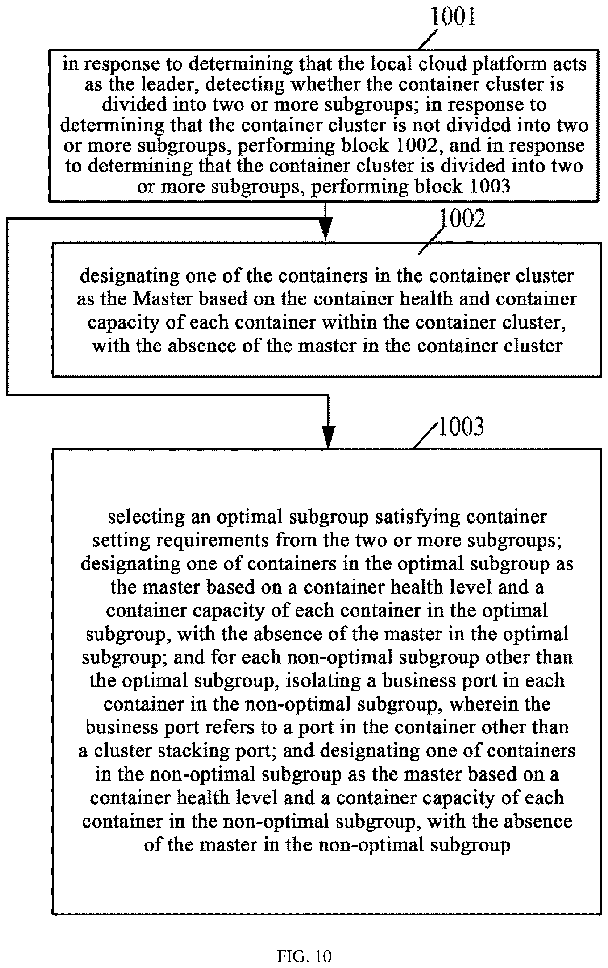

The following describes how to elect a master based on the leader's control in block 303:
Referring to Figure 10, Figure 10 provides another schematic diagram for block 303 provided in an example of the present disclosure. As shown in Figure 10, the schematic diagram may comprise the following blocks:
Block 1001, in response to determining that the local cloud platform acts as the leader, detecting whether the container cluster is divided into two or more subgroups; in response to determining that the container cluster is not divided into two or more subgroups, performing block 1002, and in response to determining that the container cluster is divided into two or more subgroups, performing block 1003.

Block 1002, designating one of containers in the container cluster as a master based on a container health level and a container capacity of each container in the container cluster, with the absence of the master in the container cluster.

Herein, one of containers in the container cluster may be designated as the master based on the following designating principles: a container with the best, i.e. largest health level, is designated as the master. In response to determining that the containers have the same container health level, a container with the largest container capacity is designated as the master.

Block 1003, selecting an optimal subgroup that meets set container requirements from the two or more subgroups; designating one of containers in the optimal subgroup as a master based on a container health level and a container capacity of each container in the optimal subgroup, with the absence of the master in the optimal subgroup; and for each non-optimal subgroup other than the optimal subgroup, isolating a business port in each container in the non-optimal subgroup, wherein the business port refers to a port in the container other than a cluster stacking port; and designating one of containers in the non-optimal subgroup as a master based on a container health level and container capacity of each container in the non-optimal subgroup, with the absence of the master in the non-optimal subgroup.

In this example, the optimal subgroup may be a subgroup with the smallest number of containers.

In this example, the designation of one of containers in the optimal subgroup as a master or the designation of one of containers in the non-optimal subgroup as a master may be performed according to the above designating principles, and will not be elaborated here.

Thus, the flow shown in Figure 10 is completed.

Through the flow shown in Figure 10, the election of master based on the control of the leader is achieved.

It should be noted that in this example, in response to determining that the original abnormal master recovers to be normal, it is possible to control the other non-optimal subgroups other than the optimal subgroup to restart and join the optimal subgroup, eventually recovering to the status prior to the original master's abnormality occurs.

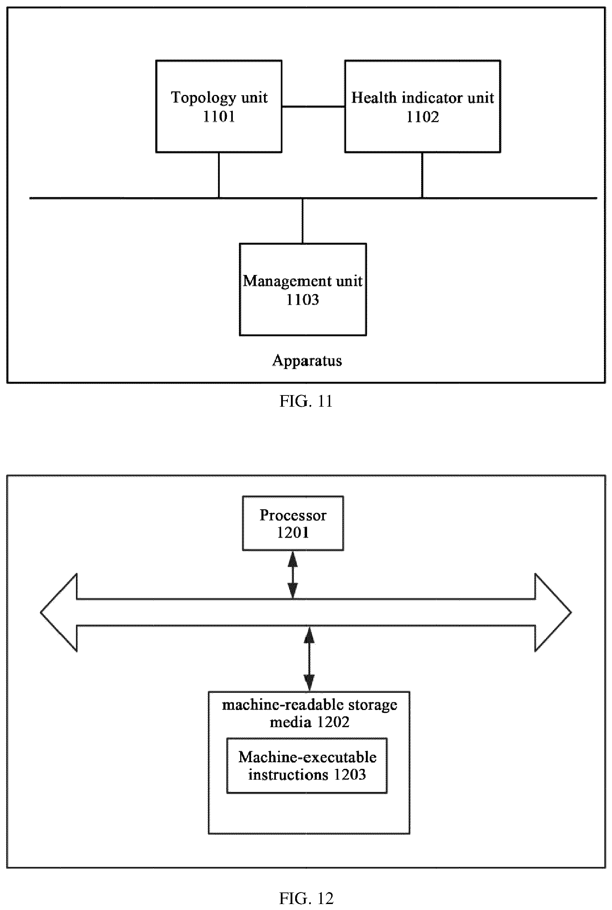

The method provided in this example of the present disclosure is described above, and the apparatus provided in an example of the present disclosure is described below:
Referring to Figure 11, Figure 11 is a structural diagram of the apparatus provided in the example of the present disclosure. The apparatus is applied to any member apparatus in a stacked system, the stacked system is obtained by stacking N member apparatuses, each of which is deployed with both a cloud platform and a container, cloud platforms on different member apparatuses in the stacked system form a cloud platform cluster, and containers on different member apparatuses in the stacked system form a container cluster, wherein the apparatus comprises:
a topology unit, which is to obtain container cluster topology information from a cloud platform that is elected as a leader in the cloud platform cluster in response to determining that a local cloud platform acts as a follower in the cloud platform cluster; sending the container cluster topology information to other member apparatuses in response to determining the local cloud platform acts as a leader;
a health indicator unit, which is to, in response to determining that the local cloud platform acts as a leader, determine a container health level of a local container in the member apparatus based on a health indicator of a health status of the local container, and receive health indicators of containers reported by other member apparatuses in the stacked system, then determine container health levels of the containers on the other member apparatuses based on the received health indicators, and issue the container health levels to the other member apparatuses;
a management unit, which is to, in response to determining that the local cloud platform acts as the follower, in response to determining that the local container is a slave container, slave, in the container cluster and a master container, master, election event in the container cluster is detected by the local container, then in response to determining that the leader is abnormal or a link between this container and the leader is abnormal, send an unicast election message to other containers participating in the election in the container cluster based on the container cluster topology information to obtain container health levels of the other containers, and then elect a master based on the container health level of the local container and the container health levels of the other containers; in response to determining that the leader in the cloud platform cluster is normal and the link between this container and the leader is normal, elect the master based on the control of the leader. The local container takes over the original master's tasks and notifies other slaves to stop the election as it is elected as the master(a new). The local container continues to function in the role of slave as it is elected as slave..

Optionally, the health indicator comprises: health indicators in different dimensions in a container environment, and health indicators in different dimensions a the container capacity;
The container health level is positively correlated with a container environment health level and a container capacity health level, wherein the container environment health level is determined based on the health indicators in various dimensions in the container environment, and the container capacity heath is determined based on the health indicators in various dimensions in the container capacity.

Optionally, the master election event comprises one or more of the following events: a critical component designated to the master in the container cluster fails, and a heartbeat detection timeout; wherein, the heartbeat detection is performed between the slave and master in the container cluster, and in response to determining that the slave does not receive a response from the master within the set time period, the heartbeat detection timeout is determined.

Optionally, the management unit further switches the status of the local container to the election status and starts the election timer in response to determining that the leader is abnormal or a link between this container and the leader is abnormal;
Optionally, electing the master based on the container health level of the local container and the container health levels of the other containers comprises:
in response to determining that the container health levels of all of the other containers participating in the election are obtained prior to the election timer times out, turning off the election timer, and electing the master based on the container health level of the local container and the container health levels of the other containers; in response to determining that the container health levels of all of the other containers participating in the election are not obtained prior to the election timer times out, electing the master based on the container health level of the local container and the container health levels of the other containers in response to determining the election timer times out.

Optionally, electing the master based on the container health level of the local container and the container health levels of the other containers comprises: electing a container with a largest container health level from the container health level of the local container and the container health levels of the other containers; in response to determining that values of container health levels of two or more containers are the same and largest, electing a container with a longest running time from the two or more containers; in response to determining that the number of the elected containers with the longest running time is greater than 1, selecting, from the elected containers with the longest running time, a container which has a bridge MAC address meeting set requirements as the master.

Optionally, electing the master based on the control of the leader comprises: in response to determining that the local cloud platform acts as a leader, detecting whether the container cluster is divided into two or more subgroups; detecting, by the local cloud platform acting as the leader, the container cluster is not divided into two or more subgroups; designating one of the containers in the container cluster as the Master based on the container health and container capacity of each container within the container cluster, with the absence of the master in the container cluster; or detecting, by the local cloud platform acting as the leader, the container cluster is divided into two or more subgroups; selecting an optimal subgroup satisfying container setting requirements from the two or more subgroups; designating one of containers in the optimal subgroup as the master based on a container health level and a container capacity of each container in the optimal subgroup, with the absence of the master in the optimal subgroup; and for each non-optimal subgroup other than the optimal subgroup, isolating a business port in each container in the non-optimal subgroup, wherein the business port refers to a port in the container other than a cluster stacking port; and designating one of containers in the non-optimal subgroup as a master basing on a container health level and a container capacity of each container in the non-optimal subgroup, with the absence of the master in the non-optimal subgroup.

So far, the description of the apparatus shown in Figure 11 is completed.

For the implementation processes of the functions and effects of each unit in the above apparatus, please refer to in the implementation processes of the corresponding blocks of the above method for details, and will not be repeated here.

For the apparatus example, since it basically corresponds to the method example, relevant details may be found in the explanation of the method example. The apparatus example described above is only illustrative. The modules described as separate components may or may not be physically separated, and the components displayed as modules may or may not be physical modules, i.e., they may be located in one place, or may be distributed among multiple network modules. Some or all of the modules may be selected as needed to achieve the purpose of solutions in this specification. Those skilled in the art may understand and implement the present disclosure without creative work.

Correspondingly, an example of the present disclosure further provides a hardware structural diagram of the apparatus shown in Figure 11, as shown in Figure 12. The electronic apparatus may be the apparatus for implementing the above method. As shown in Figure 12, the hardware structure comprises:
**a** processor and a machine-readable storage media, where the machine-readable storage media stores machine-executable instructions therein that may be executed by the processor;
**the** processor is to execute the machine-executable instructions to carry out the method disclosed in the above example.

For example, the machine-readable storage media may be any electronic, magnetic, optical, or other physical storage apparatus, and may contain or store information such as executable instructions, data, and so on. For example, the machine-readable storage media may be: RAM (Random Access Memory), volatile memory, non-volatile memory, flash memory, storage drive (such as hard drive), solid-state drive, any type of storage disk (such as CD, DVD, etc.), or similar storage media, or a combination thereof.

So far, the description of the electronic apparatus shown in Figure 12 is completed.

The above has described specific examples of the present specification. In some cases, the actions or processes recorded in the claims may be performed in a different order than in the examples and still achieve the desired result. In addition, the processes depicted in the drawings do not necessarily require specific or continuous order to achieve the desired result. In some examples, multitasking and parallel processing are further possible or may be advantageous.

After considering the present specification and practicing the invention, those skilled in the art will readily conceive of other examples of the present specification. This specification is intended to cover any modifications, uses, or adaptations of the present specification, which follow the general principles of the present specification and comprise common knowledge or conventional techniques in the technical field not applied for in the present specification. The specification and example are illustrative, and the true scope of the specification are indicated by the following claims.

**It** should be understood that the present specification is not limited to the precise structure described above and shown in the drawings, and various modifications and changes may be made . The scope of the present specification is limited only by the appended claims.

## Claims

1. A container management method based on a cloud platform applied to a stacked system, wherein the stacked system is obtained by stacking N member apparatuses, each of which is deployed with both a cloud platform and a container, cloud platforms on different member apparatuses in the stacked system form a cloud platform cluster, and containers on different member apparatuses in the stacked system form a container cluster, wherein the method comprises:
for any member apparatus in the stacked system:
in response to determining that a cloud platform in this member apparatus acts as a follower in the cloud platform cluster, obtaining container cluster topology information from a cloud platform that is elected as a leader in the cloud platform cluster; in response to determining that the cloud platform acts as the leader, sending the container cluster topology information to other member apparatuses (301);
with the cloud platform acting as the leader, determining a container health level of a local container in the member apparatus based on a health indicator of a health status of the local container, and receiving health indicators of containers reported by other member apparatuses in the stacked system, then determining container health levels of the containers on the other member apparatuses based on the received health indicators, and issuing the container health levels to the other member apparatuses (302);
with the cloud platform acting as the follower, in response to determining that the local container is a slave container, slave, in the container cluster and a master container, master, election event in the container cluster is detected by the local container, then in response to determining that the leader or a link between this container and the leader is abnormal, sending an unicast election message to other containers participating in the election in the container cluster based on the container cluster topology information to obtain container health levels of the other containers, and then electing a master based on the container health level of the local container and the container health levels of the other containers; in response to determining that the leader in the cloud platform cluster is normal and the link between this container and the leader is normal, electing the master based on the leader's control, wherein in response to determining that the local container is elected as the master, the local container takes over an original master's work and notifies other slaves to stop the election, and in response to determining that the local container is elected as the slave, the local container continues to work as the slave (303).

2. The method according to claim 1, wherein the health indicator comprises health indicators in multiple different dimensions in a container environment and health indicators in multiple different dimensions in a container capacity;
the container health level is positively correlated with a container environment health level and a container capacity health level, wherein the container environment health level is determined based on the health indicators in various dimensions in the container environment, and the container capacity health level is determined based on the health indicators in various dimensions in the container capacity.

3. The method according to claim 1, wherein
in response to determining that the leader is abnormal or the link between this container and the leader is abnormal, the method further comprises switching a status of the local container to an election state and starting an election timer;
electing the master based on the container health level of the local container and the container health levels of the other containers, comprises:
in response to determining that container health levels of all of the other containers participating in the election are obtained prior to the election timer times out, turning off the election timer and electing the master based on the container health level of the local container and the container health levels of the other containers (701); otherwise, electing the master based on the container health level of the local container and the container health levels of the other containers in response to determining that the election timer times out (702).

4. The method according to claim 1 or 3, wherein electing the master based on the container health level of the local container and the container health levels of the other containers comprises:
electing a container with a largest container health level from the container health level of the local container and the container health levels of the other containers;
in response to determining that values of container health levels of two or more containers are the same and largest, electing a container with a longest running time from the two or more containers;
in response to determining that the number of the elected containers with the longest running time elected is greater than one, selecting, from the elected containers with the longest running time, a container which has a bridge MAC address meeting set requirements as the master.

5. The method according to claim 1, wherein electing the master based on the leader's control comprises:
detecting, by the cloud platform acting as the leader, the container cluster is not divided into two or more subgroups; designating one of the containers in the container cluster as the Master based on the container health and container capacity of each container within the container cluster, with the absence of the master in the container cluster (1001); or
detecting, by the cloud platform acting as the leader, the container cluster is divided into two or more subgroups; selecting an optimal subgroup satisfying container setting requirements from the two or more subgroups; designating one of containers in the optimal subgroup as the master based on a container health level and a container capacity of each container in the optimal subgroup, with the absence of the master in the optimal subgroup (1002); and for each non-optimal subgroup other than the optimal subgroup, isolating a business port in each container in the non-optimal subgroup, wherein the business port refers to a port in the container other than a cluster stacking port; and designating one of containers in the non-optimal subgroup as the master based on a container health level and a container capacity of each container in the non-optimal subgroup, with the absence of the master in the non-optimal subgroup (1003).

6. A stacked system, comprising N member apparatuses, wherein the stacked system is obtained by stacking the N member apparatuses, each of which is deployed with both a cloud platform and a container, cloud platforms on different member apparatuses in the stacked system form a cloud platform cluster, and containers on different member apparatuses in the stacked system form a container cluster, wherein any member apparatus in the stacked system performs the following operations:
in response to determining that a cloud platform in this member apparatus acts as a follower in the cloud platform cluster, obtaining container cluster topology information from a cloud platform that is elected as a leader in the cloud platform cluster; in response to determining that the cloud platform acts as the leader, sending the container cluster topology information to other member apparatuses;
with the cloud platform acting as the leader, determining a container health level of a local container in the member apparatus based on a health indicator of a health status of the local container, and receiving health indicators of containers reported by other member apparatuses in the stacked system, then determining container health levels of the containers on the other member apparatuses based on the received health indicators, and issuing the container health levels to the other member apparatuses;
with the cloud platform acting as the follower, in response to determining that the local container is a slave container, slave, in the container cluster and a master container, master, election event in the container cluster is detected by the local container, then in response to determining that the leader or a link between this container and the leader is abnormal, sending an unicast election message to other containers participating in the election in the container cluster based on the container cluster topology information to obtain container health levels of the other containers, and then electing a master based on the container health level of the local container and the container health levels of the other containers; in response to determining that the leader in the cloud platform cluster is normal and the link between this container and the leader is normal, electing the master based on the leader's control, wherein in response to determining that the local container is elected as the master, the local container takes over an original master's work and notifies other slaves to stop the election, and in response to determining that the local container is elected as the slave, the local container continues to work as the slave.

7. The stacked system according to claim 6, wherein the health indicator comprises: health indicators in multiple different dimensions in a container environment, and health indicators in multiple different dimensions in a container capacity;
the container health level is positively correlated with a container environment health level and a container capacity health level, wherein the container environment health level is determined based on the health indicators in various dimensions in the container environment, and the container capacity health level is determined based on the health indicators in various dimensions in the container capacity.

8. The stacked system according to claim 6, wherein
the member apparatus further switches a status of the local container to an election state and starts an election timer in response to determining that the leader is abnormal or the link between this container and the leader is abnormal;electing the master based on the container health level of the local container and the container health levels of the other containers comprises:
in response to determining that container health levels of all of the other containers participating in the election are obtained prior to the election timer times out, turning off the election timer, and electing the master based on the container health level of the local container and the container health levels of the other containers; in response to determining that the container health levels of all of the other containers participating in the election are not obtained prior to the election timer times out, electing the master based on the container health level of the local container and the container health levels of the other containers in response to determining that the election timer times out.

9. The stacked system according to claim 6 or 8, wherein electing the master based on the container health level of the local container and the container health levels of the other containers comprises:
electing a container with a largest container health level from the container health level of the local container and the container health levels of the other containers;
in response to determining that values of container health levels of two or more containers are the same and largest, electing a container with a longest running time from the two or more containers;
in response to determining that the number of the elected containers with the longest running time is greater than one, selecting, from the elected containers with the longest running time, a container which has a bridge MAC address meeting set requirements as the master.

10. The stacked system according to claim 6, wherein electing the master based on the leader's control comprises:
detecting, by the cloud platform acting as the leader, the container cluster is not divided into two or more subgroups; designating one of the containers in the container cluster as the Master based on the container health and container capacity of each container within the container cluster, with the absence of the master in the container cluster; or
detecting, by the cloud platform acting as the leader, the container cluster is divided into two or more subgroups; selecting an optimal subgroup satisfying container setting requirements from the two or more subgroups; designating one of containers in the optimal subgroup as the master based on a container health level and a container capacity of each container in the optimal subgroup, with the absence of the master in the optimal subgroup; and for each non-optimal subgroup other than the optimal subgroup, isolating a business port in each container in the non-optimal subgroup, wherein the business port refers to a port in the container other than a cluster stacking port; and designating one of containers in the non-optimal subgroup as a master based on a container health level and a container capacity of each container in the non-optimal subgroup, with the absence of the master in the non-optimal subgroup.

## Patentansprüche

1. Container-Verwaltungsverfahren basierend auf einer Cloud-Plattform, das auf ein gestapeltes System angewendet wird, wobei das gestapelte System durch Stapeln von N Mitgliedseinrichtungen erhalten wird, die jeweils mit sowohl einer Cloud-Plattform als auch einem Container bereitgestellt sind, Cloud-Plattformen auf verschiedenen Mitgliedseinrichtungen in dem gestapelten System einen Cloud-Plattform-Cluster ausbilden und Container auf verschiedenen Mitgliedseinrichtungen in dem gestapelten System einen Container-Cluster ausbilden, wobei das Verfahren umfasst:
für jede beliebige Mitgliedseinrichtung in dem gestapelten System:
als Reaktion auf ein Bestimmen, dass eine Cloud-Plattform in dieser Mitgliedseinrichtung als ein Follower in dem Cloud-Plattform-Cluster fungiert, Erhalten von Container-Cluster-Topologieinformationen von einer Cloud-Plattform, die als ein Leader in dem Cloud-Plattform-Cluster gewählt ist; als Reaktion auf das Bestimmen, dass die Cloud-Plattform als der Leader fungiert, Senden der Container-Cluster-Topologieinformationen an andere Mitgliedseinrichtungen (301);
wenn die Cloud-Plattform als der Leader fungiert, Bestimmen eines Container-Gesundheitsniveaus eines lokalen Containers in der Mitgliedseinrichtung basierend auf einem Gesundheitsindikator eines Gesundheitsstatus des lokalen Containers, und Empfangen von Gesundheitsindikatoren von Containern, die durch andere Mitgliedseinrichtungen in dem gestapelten System gemeldet werden, dann Bestimmen von Container-Gesundheitsniveaus der Container auf den anderen Mitgliedseinrichtungen basierend auf den empfangenen Gesundheitsindikatoren, und Ausgeben der Container-Gesundheitsniveaus an die anderen Mitgliedseinrichtungen (302);
wenn die Cloud-Plattform als der Follower fungiert, als Reaktion auf das Bestimmen, dass der lokale Container ein Slave-Container, Slave, in dem Container-Cluster ist und ein Wahlereignis eines Master-Containers, Master, in dem Container-Cluster durch den lokalen Container erfasst wird, dann als Reaktion auf das Bestimmen, dass der Leader oder eine Verbindung zwischen diesem Container und dem Leader anormal ist, Senden einer Unicast-Wahlnachricht an andere Container, die an der Wahl in dem Container-Cluster teilnehmen, basierend auf den Container-Cluster-Topologieinformationen, um Container-Gesundheitsniveaus der anderen Container zu erhalten, und dann Wählen eines Masters basierend auf dem Container-Gesundheitsniveau des lokalen Containers und den Container-Gesundheitsniveaus der anderen Container; als Reaktion auf das Bestimmen, dass der Leader in dem Cloud-Plattform-Cluster normal ist und die Verbindung zwischen diesem Container und dem Leader normal ist, Wählen des Masters basierend auf der Steuerung des Leaders, wobei als Reaktion auf das Bestimmen, dass der lokale Container als der Master gewählt wird, der lokale Container eine Arbeit eines ursprünglichen Masters übernimmt und andere Slaves benachrichtigt, die Wahl zu beenden, und als Reaktion auf das Bestimmen, dass der lokale Container als der Slave gewählt wird, der lokale Container weiterhin als der Slave arbeitet (303).

2. Verfahren nach Anspruch 1, wobei der Gesundheitsindikator Gesundheitsindikatoren in mehreren verschiedenen Dimensionen einer ContainerUmgebung und Gesundheitsindikatoren in mehreren verschiedenen Dimensionen einer Container-Kapazität umfasst;
wobei das Container-Gesundheitsniveau positiv mit einem Container-Umgebungsgesundheitsniveau und einem Container-Kapazitätsgesundheitsniveau korreliert ist, wobei das Container-Umgebungsgesundheitsniveau basierend auf den Gesundheitsindikatoren in verschiedenen Dimensionen der ContainerUmgebung bestimmt wird und das Container-Kapazitätsgesundheitsniveau basierend auf den Gesundheitsindikatoren in verschiedenen Dimensionen der Container-Kapazität bestimmt wird.

3. Verfahren nach Anspruch 1, wobei
als Reaktion auf das Bestimmen, dass der Leader anormal ist oder die Verbindung zwischen diesem Container und dem Leader anormal ist, das Verfahren ferner ein Umschalten eines Status des lokalen Containers in einen Wahlzustand und ein Starten eines Wahlzeitgebers umfasst;
das Wählen des Masters basierend auf dem Container-Gesundheitsniveau des lokalen Containers und den Container-Gesundheitsniveaus der anderen Container umfasst:
als Reaktion auf das Bestimmen, dass die Container-Gesundheitsniveaus aller anderen Container, die an der Wahl teilnehmen, erhalten werden, bevor der Wahlzeitgeber abläuft, Ausschalten des Wahlzeitgebers und Wählen des Masters basierend auf dem Container-Gesundheitsniveau des lokalen Containers und den Container-Gesundheitsniveaus der anderen Container (701); andernfalls, Wählen des Masters basierend auf dem Container-Gesundheitsniveau des lokalen Containers und den Container-Gesundheitsniveaus der anderen Container als Reaktion auf das Bestimmen, dass der Wahlzeitgeber abläuft (702).

4. Verfahren nach Anspruch 1 oder 3, wobei das Wählen des Masters basierend auf dem Container-Gesundheitsniveau des lokalen Containers und den Container-Gesundheitsniveaus der anderen Container umfasst:
Wählen eines Containers mit einem größten Container-Gesundheitsniveau aus dem Container-Gesundheitsniveau des lokalen Containers und den Container-Gesundheitsniveaus der anderen Container;
als Reaktion auf das Bestimmen, dass Werte von Container-Gesundheitsniveaus von zwei oder mehr Containern gleich und am größten sind, Wählen eines Containers mit einer längsten Laufzeit aus den zwei oder mehr Containern;
als Reaktion auf das Bestimmen, dass die Anzahl der gewählten Container mit der längsten Laufzeit, die gewählt wurde, größer als eins ist, Auswählen, aus den gewählten Containern mit der längsten Laufzeit, eines Containers, der eine Bridge-MAC-Adresse aufweist, die festgelegte Anforderungen einhält, als den Master.

5. Verfahren nach Anspruch 1, wobei das Wählen des Masters basierend auf der Steuerung des Leaders umfasst:
Erfassen, durch die als der Leader fungierende Cloud-Plattform, dass der Container-Cluster nicht in zwei oder mehr Untergruppen unterteilt ist; Festlegen eines der Container in dem Container-Cluster als den Master basierend auf der Container-Gesundheit und der Container-Kapazität jedes Containers innerhalb des Container-Clusters, bei dem Fehlen des Masters in dem Container-Cluster (1001); oder
Erfassen, durch die als der Leader fungierende Cloud-Plattform, dass der Container-Cluster in zwei oder mehr Untergruppen unterteilt ist; Auswählen einer optimalen Untergruppe, die Container-Einstellungsanforderungen erfüllt, aus den zwei oder mehr Untergruppen; Festlegen eines der Container in der optimalen Untergruppe als den Master basierend auf einem Container-Gesundheitsniveau und einer Containerkapazität jedes Containers in der optimalen Untergruppe, bei dem Fehlen des Masters in der optimalen Untergruppe (1002); und für jede andere nicht optimale Untergruppe als die optimale Untergruppe, Isolieren eines Business-Ports in jedem Container in der nicht optimalen Untergruppe, wobei sich der Business-Port auf einen anderen Port in dem Container als einen Cluster-Stapel-Port bezieht; und Festlegen eines der Container in der nicht optimalen Untergruppe als den Master basierend auf einem Container-Gesundheitsniveau und einer Containerkapazität jedes Containers in der nicht optimalen Untergruppe, bei dem Fehlen des Masters in der nicht optimalen Untergruppe (1003).

6. Gestapeltes System, umfassend N Mitgliedseinrichtungen, wobei
das gestapelte System durch Stapeln der N Mitgliedseinrichtungen erhalten wird, die jeweils mit sowohl einer Cloud-Plattform als auch mit einem Container bereitgestellt sind, Cloud-Plattformen auf verschiedenen Mitgliedseinrichtungen in dem gestapelten System einen Cloud-Plattform-Cluster ausbilden und Container auf verschiedenen Mitgliedseinrichtungen in dem gestapelten System einen Container-Cluster ausbilden, wobei eine beliebige Mitgliedseinrichtung in dem gestapelten System die folgenden Vorgänge durchführt:
als Reaktion auf das Bestimmen, dass eine Cloud-Plattform in dieser Mitgliedseinrichtung als ein Follower in dem Cloud-Plattform-Cluster fungiert, Erhalten von Container-Cluster-Topologieinformationen von einer Cloud-Plattform, die als ein Leader in dem Cloud-Plattform-Cluster gewählt ist; als Reaktion auf das Bestimmen, dass die Cloud-Plattform als der Leader fungiert, Senden der Container-Cluster-Topologieinformationen an andere Mitgliedseinrichtungen;
wenn die Cloud-Plattform als der Leader fungiert, Bestimmen eines Container-Gesundheitsniveaus eines lokalen Containers in der Mitgliedseinrichtung basierend auf einem Gesundheitsindikator eines Gesundheitsstatus des lokalen Containers, und Empfangen von Gesundheitsindikatoren von Containern, die durch andere Mitgliedseinrichtungen in dem gestapelten System gemeldet werden, dann Bestimmen von Container-Gesundheitsniveaus der Container auf den anderen Mitgliedseinrichtungen basierend auf den empfangenen Gesundheitsindikatoren, und Ausgeben der Container-Gesundheitsniveaus an die anderen Mitgliedseinrichtungen;
wenn die Cloud-Plattform als der Follower fungiert, als Reaktion auf das Bestimmen, dass der lokale Container ein Slave-Container, Slave, in dem Container-Cluster ist und ein Wahlereignis eines Master-Containers, Master, in dem Container-Cluster durch den lokalen Container erfasst wird, dann als Reaktion auf das Bestimmen, dass der Leader oder eine Verbindung zwischen diesem Container und dem Leader anormal ist, Senden einer Unicast-Wahlnachricht an andere Container, die an der Wahl in dem Container-Cluster teilnehmen, basierend auf den Container-Cluster-Topologieinformationen, um Container-Gesundheitsniveaus der anderen Container zu erhalten, und dann Wählen eines Masters basierend auf dem Container-Gesundheitsniveau des lokalen Containers und den Container-Gesundheitsniveaus der anderen Container; als Reaktion auf das Bestimmen, dass der Leader in dem Cloud-Plattform-Cluster normal ist und die Verbindung zwischen diesem Container und dem Leader normal ist, Wählen des Masters basierend auf der Steuerung des Leaders, wobei als Reaktion auf das Bestimmen, dass der lokale Container als der Master gewählt wird, der lokale Container eine Arbeit des ursprünglichen Masters übernimmt und andere Slaves benachrichtigt, die Wahl zu beenden, und als Reaktion auf das Bestimmen, dass der lokale Container als der Slave gewählt wird, der lokale Container weiterhin als der Slave arbeitet.

7. Gestapeltes System nach Anspruch 6, wobei der Gesundheitsindikator umfasst: Gesundheitsindikatoren in mehreren verschiedenen Dimensionen einer ContainerUmgebung und Gesundheitsindikatoren in mehreren verschiedenen Dimensionen einer Container-Kapazität;
wobei das Container-Gesundheitsniveau positiv mit einem Container-Umgebungsgesundheitsniveau und einem Container-Kapazitätsgesundheitsniveau korreliert ist, wobei das Container-Umgebungsgesundheitsniveau basierend auf den Gesundheitsindikatoren in verschiedenen Dimensionen der ContainerUmgebung bestimmt wird und das Container-Kapazitätsgesundheitsniveau basierend auf den Gesundheitsindikatoren in verschiedenen Dimensionen der Container-Kapazität bestimmt wird.

8. Gestapeltes System nach Anspruch 6, wobei
die Mitgliedseinrichtung ferner einen Status des lokalen Containers in einen Wahlzustand umschaltet und einen Wahlzeitgeber als Reaktion auf das Bestimmen, dass der Leader anormal ist oder die Verbindung zwischen diesem Container und dem Leader anormal ist, startet; das Wählen des Masters basierend auf dem Container-Gesundheitsniveau des lokalen Containers und den Container-Gesundheitsniveaus der anderen Container umfasst:
als Reaktion auf das Bestimmen, dass die Container-Gesundheitsniveaus aller anderen Container, die an der Wahl teilnehmen, erhalten werden, bevor der Wahlzeitgeber abläuft, Ausschalten des Wahlzeitgebers und Wählen des Masters basierend auf dem Container-Gesundheitsniveau des lokalen Containers und den Container-Gesundheitsniveaus der anderen Container; als Reaktion auf das Bestimmen, dass die Container-Gesundheitsniveaus aller anderen Container, die an der Wahl teilnehmen, nicht erhalten werden, bevor der Wahlzeitgeber abläuft, Wählen des Masters basierend auf dem Container-Gesundheitsniveau des lokalen Containers und den Container-Gesundheitsniveaus der anderen Container als Reaktion auf das Bestimmen, dass der Wahlzeitgeber abläuft.

9. Gestapeltes System nach Anspruch 6 oder 8, wobei das Wählen des Masters basierend auf dem Container-Gesundheitsniveau des lokalen Containers und den Container-Gesundheitsniveaus der anderen Container umfasst:
Wählen eines Containers mit einem größten Container-Gesundheitsniveau aus dem Container-Gesundheitsniveau des lokalen Containers und den Container-Gesundheitsniveaus der anderen Container;
als Reaktion auf das Bestimmen, dass Werte von Container-Gesundheitsniveaus von zwei oder mehr Containern gleich und am größten sind, Wählen eines Containers mit einer längsten Laufzeit aus den zwei oder mehr Containern;
als Reaktion auf das Bestimmen, dass die Anzahl der gewählten Container mit der längsten Laufzeit größer als eins ist, Auswählen, aus den gewählten Containern mit der längsten Laufzeit, eines Containers, der eine Bridge-MAC-Adresse aufweist, die festgelegte Anforderungen einhält, als den Master.

10. Gestapeltes System nach Anspruch 6, wobei das Wählen des Masters basierend auf der Steuerung des Leaders umfasst:
Erfassen, durch die als der Leader fungierende Cloud-Plattform, dass der Container-Cluster nicht in zwei oder mehr Untergruppen unterteilt ist; Festlegen eines der Container in dem Container-Cluster als den Master basierend auf der Container-Gesundheit und der Container-Kapazität jedes Containers innerhalb des Container-Clusters, bei dem Fehlen des Masters in dem Container-Cluster; oder
Erfassen, durch die als der Leader fungierende Cloud-Plattform, dass der Container-Cluster in zwei oder mehr Untergruppen unterteilt ist; Auswählen einer optimalen Untergruppe, die Container-Einstellungsanforderungen erfüllt, aus den zwei oder mehr Untergruppen; Festlegen eines der Container in der optimalen Untergruppe als den Master basierend auf einem Container-Gesundheitsniveau und einer Container-Kapazität jedes Containers in der optimalen Untergruppe, bei dem Fehlen des Masters in der optimalen Untergruppe; und für jede andere nicht optimale Untergruppe als die optimale Untergruppe, Isolieren eines Business-Ports in jedem Container in der nicht optimalen Untergruppe, wobei sich der Business-Port auf einen anderen Port in dem Container als einen Cluster-Stapel-Port bezieht; und Festlegen eines der Container in der nicht optimalen Untergruppe als einen Master basierend auf einem Container-Gesundheitsniveau und einer Container-Kapazität jedes Containers in der nicht optimalen Untergruppe, bei dem Fehlen des Masters in der nicht optimalen Untergruppe.

## Revendications

1. Procédé de gestion de conteneurs en fonction d'une plateforme cloud appliqué à un système empilé, dans lequel le système empilé est obtenu en empilant N appareils membres, chacun d'entre eux est déployé avec à la fois une plateforme cloud et un conteneur, des plateformes cloud sur différents appareils membres dans le système empilé forment une grappe de plateformes cloud, et les conteneurs sur différents appareils membres dans le système empilé forment une grappe de conteneurs, dans lequel le procédé comprend :
pour l'un quelconque appareil membre dans le système empilé :
en réponse au fait de déterminer qu'une plateforme cloud dans cet appareil membre agit en tant que suiveur dans la grappe de plateformes cloud, l'obtention d'informations sur la topologie de grappe de conteneurs à partir d'une plateforme cloud qui est élue en tant que chef dans la grappe de plateformes cloud ; en réponse au fait de déterminer que la plateforme cloud agit en tant que chef, l'envoi des informations sur la topologie de grappe de conteneurs aux autres appareils membres (301) ;
avec la plateforme cloud agissant en tant que chef, la détermination d'un niveau d'intégrité de conteneur d'un conteneur local dans l'appareil membre en fonction d'un indicateur d'intégrité d'un état d'intégrité du conteneur local, et la réception d'indicateurs d'intégrité de conteneurs signalés par d'autres appareils membres dans le système empilé, puis la détermination de niveaux d'intégrité de conteneur des conteneurs sur les autres appareils membres en fonction des indicateurs d'intégrité reçus, et la transmission des niveaux d'intégrité de conteneur aux autres appareils membres (302) ;
avec la plateforme cloud agissant en tant que suiveur, en réponse au fait de déterminer que le conteneur local est un conteneur esclave, esclave, dans la grappe de conteneurs et un conteneur maître, maître, un événement d'élection dans la grappe de conteneurs est détecté par le conteneur local, puis en réponse au fait de déterminer que le chef ou une liaison entre ce conteneur et le chef est anormale, l'envoi d'un message d'élection en monodiffusion à d'autres conteneurs participant à l'élection dans la grappe de conteneurs en fonction des informations sur la topologie de grappe de conteneurs pour obtenir des niveaux d'intégrité de conteneur des autres conteneurs, et ensuite l'élection d'un maître en fonction du niveau d'intégrité de conteneur du conteneur local et des niveaux d'intégrité de conteneur des autres conteneurs ; en réponse au fait de déterminer que le chef dans la grappe de plateformes cloud est normal et que la liaison entre ce conteneur et le chef est normale, l'élection du maître en fonction de la commande du chef, dans lequel, en réponse au fait de déterminer que le conteneur local est élu en tant que maître, le conteneur local prend le contrôle du travail du maître d'origine et notifie à d'autres esclaves d'arrêter l'élection, et en réponse au fait de déterminer que le conteneur local est élu en tant qu'esclave, le conteneur local continue à travailler en tant qu'esclave (303).

2. Procédé selon la revendication 1, dans lequel l'indicateur d'intégrité comprend des indicateurs d'intégrité dans de multiples dimensions différentes dans un environnement de conteneur et des indicateurs d'intégrité dans de multiples dimensions différentes dans une capacité de conteneur ;
le niveau d'intégrité de conteneur est positivement mis en corrélation avec un niveau d'intégrité d'environnement de conteneur et un niveau d'intégrité de capacité de conteneur, dans lequel le niveau d'intégrité d'environnement de conteneur est déterminé en fonction des indicateurs d'intégrité dans diverses dimensions dans l'environnement de conteneur, et le niveau d'intégrité de capacité de conteneur est déterminé en fonction des indicateurs d'intégrité dans diverses dimensions dans la capacité de conteneur.

3. Procédé selon la revendication 1, dans lequel
en réponse au fait de déterminer que le chef est anormal ou que la liaison entre ce conteneur et le chef est anormale, le procédé comprend en outre le passage d'un état du conteneur local à un état d'élection et le démarrage d'un minuteur d'élection ;
l'élection du maître en fonction du niveau d'intégrité de conteneur du conteneur local et des niveaux d'intégrité de conteneur des autres conteneurs, comprend :
en réponse au fait de déterminer que des niveaux d'intégrité de conteneur de tous les autres conteneurs participant à l'élection sont obtenus avant l'expiration du minuteur d'élection, la désactivation du minuteur d'élection et l'élection du maître en fonction du niveau d'intégrité de conteneur du conteneur local et des niveaux d'intégrité de conteneur des autres conteneurs (701) ; sinon, l'élection du maître en fonction du niveau d'intégrité de conteneur du conteneur local et des niveaux d'intégrité de conteneur des autres conteneurs en réponse au fait de déterminer que le minuteur d'élection expire (702).

4. Procédé selon la revendication 1 ou 3, dans lequel l'élection du maître en fonction du niveau d'intégrité de conteneur du conteneur local et des niveaux d'intégrité de conteneur des autres conteneurs comprend :
l'élection d'un conteneur avec un niveau d'intégrité de conteneur le plus élevé parmi le niveau d'intégrité de conteneur du conteneur local et les niveaux d'intégrité de conteneur des autres conteneurs ;
en réponse au fait de déterminer que des valeurs de niveaux d'intégrité de conteneur de deux conteneurs ou plus sont les mêmes et les plus élevées, l'élection d'un conteneur avec un temps d'exécution le plus long parmi les deux conteneurs ou plus ;
en réponse au fait de déterminer que le nombre de conteneurs élus avec le temps d'exécution le plus long élu est supérieur à un, la sélection, parmi les conteneurs élus avec le temps d'exécution le plus long, d'un conteneur qui dispose d'une adresse MAC de pont répondant à des exigences définies en tant que maître.

5. Procédé selon la revendication 1, dans lequel l'élection du maître en fonction de la commande du chef comprend :
le fait de détecter, par la plateforme cloud agissant en tant que chef, que la grappe de conteneurs n'est pas divisée en deux sous-groupes ou plus ; la désignation de l'un des conteneurs dans la grappe de conteneurs en tant que maître en fonction de l'intégrité de conteneur et d'une capacité de conteneur de chaque conteneur au sein de la grappe de conteneurs, en l'absence du maître dans la grappe de conteneurs (1001) ; ou
le fait de détecter, par la plateforme cloud agissant en tant que chef, que la grappe de conteneurs est divisée en deux sous-groupes ou plus ; la sélection d'un sous-groupe optimal répondant à des exigences de définition de conteneurs parmi les deux sous-groupes ou plus ; la désignation de l'un des conteneurs dans le sous-groupe optimal en tant que maître en fonction d'un niveau d'intégrité de conteneur et d'une capacité de conteneur de chaque conteneur dans le sous-groupe optimal, en l'absence du maître dans le sous-groupe optimal (1002) ; et pour chaque sous-groupe non optimal autre que le sous-groupe optimal, l'isolation d'un port métier dans chaque conteneur dans le sous-groupe non optimal, dans lequel le port métier se réfère à un port dans le conteneur autre qu'un port d'empilement de grappe ; et la désignation de l'un des conteneurs dans le sous-groupe non optimal en tant que maître en fonction d'un niveau d'intégrité de conteneur et d'une capacité de conteneur de chaque conteneur dans le sous-groupe non optimal, en l'absence du maître dans le sous-groupe non optimal (1003).

6. Système empilé comprenant N appareils membres, dans lequel
le système empilé est obtenu en empilant les N appareils membres, chacun d'entre eux est déployé avec à la fois une plateforme cloud et un conteneur, des plateformes cloud sur différents appareils membres dans le système empilé forment une grappe de plateformes cloud, et des conteneurs sur différents appareils membres dans le système empilé forment une grappe de conteneurs, dans lequel l'un quelconque appareil membre dans le système empilé effectue les opérations suivantes :
en réponse au fait de déterminer qu'une plateforme cloud dans cet appareil membre agit en tant que suiveur dans la grappe de plateformes cloud, l'obtention d'informations sur la topologie de grappe de conteneurs à partir d'une plateforme cloud qui est élue en tant que chef dans la grappe de plateformes cloud ; en réponse au fait de déterminer que la plateforme cloud agit en tant que chef, l'envoi des informations sur la topologie de grappe de conteneurs à d'autres appareils membres ;
avec la plateforme cloud agissant en tant que chef, la détermination d'un niveau d'intégrité de conteneur d'un conteneur local dans l'appareil membre en fonction d'un indicateur d'intégrité d'un état d'intégrité du conteneur local, et la réception d'indicateurs d'intégrité de conteneurs signalés par d'autres appareils membres dans le système empilé, puis la détermination de niveaux d'intégrité de conteneur des conteneurs sur les autres appareils membres en fonction des indicateurs d'intégrité reçus, et la transmission des niveaux d'intégrité de conteneur aux autres appareils membres ;
avec la plateforme cloud agissant en tant que suiveur, en réponse au fait de déterminer que le conteneur local est un conteneur esclave, esclave, dans la grappe de conteneurs et un conteneur maître, maître, un événement d'élection dans la grappe de conteneurs est détecté par le conteneur local, puis en réponse au fait de déterminer que le chef ou une liaison entre ce conteneur et le chef est anormale, l'envoi d'un message d'élection en monodiffusion à d'autres conteneurs participant à l'élection dans la grappe de conteneurs en fonction des informations sur la topologie de grappe de conteneurs pour obtenir des niveaux d'intégrité de conteneur des autres conteneurs, et ensuite l'élection d'un maître en fonction du niveau d'intégrité de conteneur du conteneur local et des niveaux d'intégrité de conteneur des autres conteneurs ; en réponse au fait de déterminer que le chef dans la grappe de plateformes cloud est normal et que la liaison entre ce conteneur et le chef est normale, l'élection du maître en fonction de la commande du chef, dans lequel, en réponse au fait de déterminer que le conteneur local est élu en tant que maître, le conteneur local prend le contrôle du travail du maître d'origine et notifie à d'autres esclaves d'arrêter l'élection, et en réponse au fait de déterminer que le conteneur local est élu en tant qu'esclave, le conteneur local continue à travailler en tant qu'esclave.

7. Système empilé selon la revendication 6, dans lequel l'indicateur d'intégrité comprend : des indicateurs d'intégrité dans de multiples dimensions différentes dans un environnement de conteneur, et des indicateurs d'intégrité dans de multiples dimensions différentes dans une capacité de conteneur ;
le niveau d'intégrité de conteneur est positivement mis en corrélation avec un niveau d'intégrité d'environnement de conteneur et un niveau d'intégrité de capacité de conteneur, dans lequel le niveau d'intégrité d'environnement de conteneur est déterminé en fonction des indicateurs d'intégrité dans diverses dimensions dans l'environnement de conteneur, et le niveau d'intégrité de capacité de conteneur est déterminé en fonction des indicateurs d'intégrité dans diverses dimensions dans la capacité de conteneur.

8. Système empilé selon la revendication 6, dans lequel
l'appareil membre fait en outre passer un état du conteneur local à un état d'élection et démarre un minuteur d'élection en réponse au fait de déterminer que le chef est anormal ou que la liaison entre ce conteneur et le chef est anormale ; l'élection du maître en fonction du niveau d'intégrité de conteneur du conteneur local et des niveaux d'intégrité de conteneur des autres conteneurs comprend :
en réponse au fait de déterminer que les niveaux d'intégrité de conteneur de tous les autres conteneurs participant à l'élection sont obtenus avant l'expiration du minuteur d'élection, la désactivation du minuteur d'élection et l'élection du maître en fonction du niveau d'intégrité de conteneur du conteneur local et des niveaux d'intégrité de conteneur des autres conteneurs ; en réponse au fait de déterminer que des niveaux d'intégrité de conteneur de tous les autres conteneurs participant à l'élection ne sont pas obtenus avant l'expiration du minuteur d'élection, l'élection du maître en fonction du niveau d'intégrité de conteneur du conteneur local et des niveaux d'intégrité de conteneur des autres conteneurs en réponse au fait de déterminer que le minuteur d'élection expire.

9. Système empilé selon la revendication 6 ou 8, dans lequel l'élection du maître en fonction du niveau d'intégrité de conteneur du conteneur local et des niveaux d'intégrité de conteneur des autres conteneurs comprend :
l'élection d'un conteneur avec un niveau d'intégrité de conteneur le plus élevé parmi le niveau d'intégrité de conteneur du conteneur local et les niveaux d'intégrité de conteneur des autres conteneurs ;
en réponse au fait de déterminer que des valeurs de niveaux d'intégrité de conteneur de deux conteneurs ou plus sont les mêmes et les plus élevées, l'élection d'un conteneur avec un temps d'exécution le plus long parmi les deux conteneurs ou plus ;
en réponse au fait de déterminer que le nombre de conteneurs élus avec le temps d'exécution le plus long est supérieur à un, la sélection, parmi les conteneurs sélectionnés avec le temps d'exécution le plus long, d'un conteneur qui dispose d'une adresse MAC de pont répondant à des exigences définies en tant que maître.

10. Système empilé selon la revendication 6, dans lequel l'élection du maître en fonction de la commande du chef comprend :
le fait de détecter, par la plateforme cloud agissant en tant que chef, que la grappe de conteneurs n'est pas divisé en deux sous-groupes ou plus ; la désignation de l'un des conteneurs dans la grappe de conteneurs en tant que maître en fonction de l'intégrité de conteneur et d'une capacité de conteneur de chaque conteneur au sein de la grappe de conteneurs, en l'absence du maître dans la grappe de conteneurs ; ou
le fait de détecter, par la plateforme cloud agissant en tant que chef, que la grappe de conteneurs est divisée en deux sous-groupes ou plus ; la sélection d'un sous-groupe optimal répondant à des exigences de définition de conteneurs parmi les deux sous-groupes ou plus ; la désignation de l'un des conteneurs dans le sous-groupe optimal en tant que maître en fonction d'un niveau d'intégrité de conteneur et d'une capacité de conteneur de chaque conteneur dans le sous-groupe optimal, en l'absence du maître dans le sous-groupe optimal ; et pour chaque sous-groupe non optimal autre que le sous-groupe optimal, l'isolation d'un port métier dans chaque conteneur dans le sous-groupe non optimal, dans lequel le port métier se réfère à un port dans le conteneur autre qu'un port d'empilement de grappe ; et la désignation de l'un des conteneurs dans le sous-groupe non optimal en tant que maître en fonction d'un niveau d'intégrité de conteneur et d'une capacité de conteneur de chaque conteneur dans le sous-groupe non optimal, en l'absence du maître dans le sous-groupe non optimal.
